# FASCICULE DE BREVET EUROPEEN

(11) **EP 0 971 826 B1**
(45) Date de publication et mention de la délivrance du brevet: **05.03.2003**
(21) Numéro de dépôt: 99901665.2
(22) Date de dépôt: 29.01.1999
(51) Int. Cl.: B60H 1/00

(54) **PROCEDE ET DISPOSITIF DE CHAUFFAGE ET DE CLIMATISATION DE VEHICULE AVEC SURVEILLANCE DE L'EMBUAGE DU PARE-BRISE**
VERFAHREN UND VORRICHTUNG FÜR DIE HEIZUNG UND KLIMATISIERUNG EINES KRAFTFAHRZEUGES MIT ÜBERWACHUNG DES BESCHLAGENS EINER WINDSCHUTZSCHEIBE
METHOD AND DEVICE FOR MOTOR VEHICLE HEATING AND AIR CONDITIONING MONITORING WINDSCREEN MISTING

(30) Priorité: 29.01.1998 FR 9800999
(43) Date de publication de la demande: 19.01.2000
(73) Titulaire: VALEO CLIMATISATION, 78321 La Verrière (FR)
(72) Inventeur: PETITJEAN, Christophe, F-78640 Neauphle le Vieux (FR); ROBILLARD, Jérôme, F-78320 Le Mesnil Saint Denis (FR)
(86) Numéro de dépôt international: FR9900190
(87) Numéro de publication internationale: WO99038719

(56) Documents cités:
- FR-A- 2 717 126
- FR-A- 2 731 952
- US-A- 4 408 660
- US-A- 4 848 444

## Description

L'invention concerne un procédé pour traiter un flux d'air à envoyer dans l'habitacle d'un véhicule, dans lequel ledit flux d'air, avant d'être exposé le cas échéant à une source de chaleur, traverse un évaporateur qui fait partie d'un circuit de fluide réfrigérant comprenant également un compresseur, un condenseur et au moins un détendeur, en tenant compte du choix effectué par un utilisateur entre au moins un mode de travail dudit circuit dans lequel le fluide circule dans l'évaporateur de manière à modifier la température du flux d'air et un mode repos dans lequel le fluide ne circule pas dans l'évaporateur.

Un tel procédé est utilisé couramment pour la climatisation de l'habitacle du véhicule. Il est également utilisé, au moyen d'un circuit de fluide réfrigérant tel que ceux décrits dans FR-A-2 717 126 et dans FR-A-2 731 252, dans un mode de travail où l'évaporateur cède de la chaleur au flux d'air, pour suppléer à un apport insuffisant par la source de chaleur, en particulier lorsque celle-ci est un échangeur de chaleur parcouru par le fluide de refroidissement du moteur d'entraînement du véhicule, et que le moteur, et par suite le fluide de refroidissement, n'ont pas atteint leur température de fonctionnement normale.
Il est connu par ailleurs de détecter l'apparition de buée sur les vitres au moyen d'un capteur approprié, et d'utiliser le signal du capteur pour déclencher une action visant à éliminer la buée. Cette action consiste à favoriser l'envoi d'air chaud vers les surfaces vitrées embuées, soit en modifiant la répartition du flux d'air traité entre différentes bouches de sortie dans l'habitacle, soit en augmentant globalement le débit de ce flux, soit en augmentant les échanges entre celui-ci et la source de chaleur, soit en combinant ces différentes voies. En aucun cas le signal du capteur de buée n'agit sur la circulation du fluide réfrigérant.
Il est connu du document US-A-4 408 660 qui prévoit un procédé pour traiter un flux d'air à envoyer dans l'habitacle d'un véhicule, dans lequel ledit flux d'air, avant d'être exposé le cas échéant à une source de chaleur, traverse un évaporateur qui fait partie d'un circuit de fluide réfrigérant comprenant également un compresseur, un condenseur et au moins un détendeur, en tenant compte du choix effectué par un utilisateur entre au moins un mode de travail dudit circuit constitué par un mode climatisation, dans lequel le fluide circule successivement dans l'évaporateur où il se vaporise en recevant de la chaleur du flux d'air, dans le compresseur, dans le condenseur où il se condense en cédant de la chaleur à un autre milieu et dans un détendeur, et un mode repos dans lequel le fluide ne circule pas dans l'évaporateur, procédé dans lequel la présence éventuelle de buée est détectée sur au moins une surface vitrée du véhicule vers laquelle est envoyée au moins une partie du flux traité et le résultat de la détection est pris en compte, conjointement au choix de l'utilisateur, pour définir les conditions de circulation du fluide réfrigérant.
Il a maintenant été découvert que la détection de la présence de buée pouvait avantageusement être exploitée pour la commande du circuit de fluide réfrigérant, soit pour interdire un mode de circulation favorisant l'embuage, soit au contraire pour réserver au cas où il est utile pour le désembuage un mode de circulation coûteux en énergie.
Un premier aspect de l'invention vise notamment un procédé du genre défini en introduction, et prévoit que le mode climatisation n'est autorisé qu'en cas d'embuage, au moins dans une plage déterminée de température à l'extérieur du véhicule, et le mode repos est activé lorsque le mode climatisation est choisi et non autorisé.

Des caractéristiques optionnelles de l'invention, complémentaires ou alternatives, sont énoncées ci-après:
- Le mode climatisation n'est autorisé qu'en cas d'embuage au-dessous d'une première valeur limite de température extérieure et est autorisé indépendamment de l'embuage au-dessus de ladite première valeur limite.
- Le circuit de fluide réfrigérant comporte en tant que mode de travail un mode chauffage additionnel dans lequel le fluide circule à l'état gazeux entre l'évaporateur où il cède de la chaleur au flux d'air et le compresseur, sans passer par le condenseur, l'autorisation du mode chauffage additionnel et/ou le débit du fluide réfrigérant dans celui-ci étant fonction de l'embuage.
- Le mode chauffage additionnel est commandé en fonction de l'embuage au-dessous d'une seconde valeur limite de température extérieure inférieure à la première valeur limite, et totalement inhibé au-dessus de ladite seconde valeur limite, et le mode climatisation n'est autorisé, en cas d'embuage, qu'au-dessus de ladite seconde valeur limite.
- Au-dessus de ladite seconde valeur limite, le mode chauffage additionnel est inhibé si un embuage apparaît alors que ce même mode est activé, et autorisé dans le cas contraire.

Selon un second aspect de l'invention, on prend en compte un signal représentatif de la vitesse de variation du degré d'embuage d'une surface vitrée d'un véhicule pour la gestion du traitement d'un flux d'air à envoyer au moins en partie vers cette surface vitrée, et notamment pour autoriser ou non un mode de travail dans le procédé selon le premier aspect de l'invention.

On peut en outre combiner ledit signal représentatif de la vitesse de variation du degré d'embuage à un signal représentatif du degré d'embuage.

Selon un troisième aspect de l'invention, on détecte la présence de buée et/ou la variation du degré d'embuage sur deux régions du pare-brise du véhicule éloignées l'une de l'autre au moyen d'un capteur unique comprenant un émetteur qui émet des rayonnements vers lesdites régions et un récepteur qui reçoit des rayonnements en provenance de celles-ci.

Dans une combinaison avantageuse d'au moins deux aspects de l'invention, on détecte la présence de buée et/ou la variation du degré d'embuage sur la partie supérieure et sur la partie inférieure du pare-brise, au moyen d'un même capteur ou de capteurs séparés, et on utilise les signaux de détection relatifs à la partie supérieure pour commander le mode climatisation et les signaux de détection relatifs à la partie inférieure pour commander le mode chauffage additionnel.

L'invention a également pour objet dispositif de traitement d'air pour la mise en oeuvre du procédé tel que défini ci-dessus, comprenant un circuit de fluide réfrigérant comportant un évaporateur, un compresseur, un condenseur et au moins un détendeur, une source de chaleur, des moyens pour faire passer ledit flux d'air à travers l'évaporateur puis au contact de la source de chaleur avant de l'envoyer au moins en partie vers au moins une surface vitrée du véhicule, des moyens pour faire circuler le fluide dans le circuit selon au moins un mode de travail, des moyens de sélection permettant à un utilisateur de choisir entre ce ou ces modes de travail et un mode repos, des moyens pour détecter la présence éventuelle de buée sur au moins une surface vitrée du véhicule vers laquelle est envoyée au moins une partie du flux traité et pour produire un signal U en réponse à la détection de buée, des moyens de commande pour commander le mode de circulation du fluide en fonction du choix de l'utilisateur et dudit signal, et des moyens pour déterminer la température à l'extérieur du véhicule, les moyens de commande étant propres à tenir compte de ladite température pour n'autoriser ledit mode climatisation qu'en cas d'embuage, au moins dans une plage déterminée de cette dernière, et pour activer le mode repos lorsque le mode climatisation est choisi et non autorisé.

Les caractéristiques et avantages de l'invention seront exposés plus en détail dans la description ci-après, en se référant aux dessins annexés, sur lesquels:
- la figure 1 est un schéma d'un dispositif selon l'invention;
- la figure 2 est un organigramme illustrant le procédé selon l'invention; et
- la figure 3 réunit trois graphiques 3a, 3b et 3c montrant la variation en fonction du temps de signaux produits lors de la détection de l'embuage dans un mode de réalisation du procédé selon l'invention.

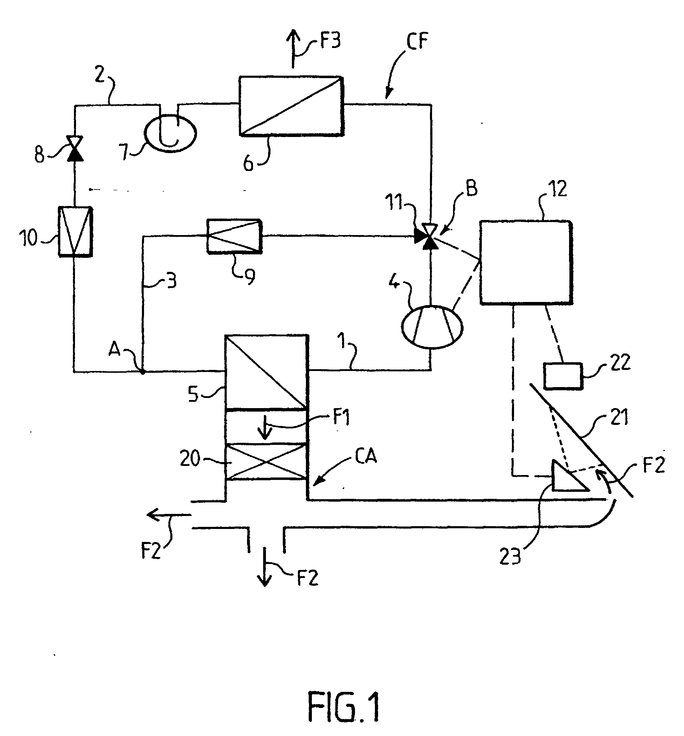

Le dispositif de la figure 1 comprend un circuit CF dans lequel circule un fluide réfrigérant propre à passer de l'état liquide à l'état gazeux en absorbant de la chaleur, et de l'état gazeux à l'état liquide en cédant de la chaleur. Les composants de ce circuit sont répartis dans trois branches 1, 2 et 3 se raccordant entre elles en deux points de jonction A et B. La branche 1 contient un compresseur 4 qui y fait circuler le fluide du point A vers le point B, et un évaporateur 5 placé en amont du compresseur. La branche 2 contient, du point B vers le point A, un condenseur 6, une bouteille 7, un clapet anti-retour 8 et un détendeur 10. Un autre détendeur 9 est placé dans la branche 3. Les trois voies d'une vanne à trois voies 11 placée au point B communiquent respectivement avec les branches 1, 2 et 3. Le compresseur 4 et la vanne 11 sont commandés par un module de commande 12 de façon à établir pour le dispositif un mode climatisation, un mode chauffage additionnel ou un mode repos, ces trois modes étant décrits plus loin.

Le dispositif comprend également un circuit d'air à traiter CA, représenté de façon très simplifiée. Dans ce circuit, un flux d'air produit par un ventilateur ou pulseur non représenté, et symbolisé par la flèche F1, traverse l'évaporateur 5 puis le cas échéant un radiateur de chauffage 20. L'air est ensuite distribué de façon connue, selon des flèches F2, en différents endroits de l'habitacle du véhicule, et en particulier en direction du pare-brise 21. Bien que, sur la figure 1, le flux F1 soit représenté comme traversant le radiateur 20, des moyens connus peuvent être prévus pour permettre à tout ou partie du flux d'air d'éviter le radiateur, en fonction des besoins de chauffage de l'habitacle.

Le dispositif comprend encore des moyens non représentés, et notamment un ventilateur, pour faire circuler un flux d'air indiqué par la flèche F3 en contact thermique avec le condenseur 6.

Un capteur 22 détecte la température à l'extérieur de l'habitacle du véhicule, et transmet un signal correspondant au module de commande 12. En outre, dans l'exemple illustré, un capteur de buée 23 surveille à la fois la région inférieure du pare-brise 21, où la buée se forme en premier et où l'apparition de caractéristiques optiques anormales indique donc un début d'embuage, et la partie supérieure où la buée disparaît en dernier, et où le retour à des caractéristiques optiques normales indique donc la fin de l'embuage. Les signaux produits par le capteur 23 sont envoyés à l'unité de commande 12.

Lors du fonctionnement du dispositif en mode climatisation, la vanne 11 est commandée de manière à envoyer le fluide refoulé par le compresseur vers le condenseur 6 où il se condense en cédant de la chaleur au flux d'air F3, puis traverse la bouteille 7 et le clapet anti-retour 8 et subit une détente dans le détendeur 10. Le fluide se vaporise dans l'évaporateur 5 en refroidissant le flux d'air F1. Le fluide gazeux sortant de l'évaporateur 5 est de nouveau aspiré par le compresseur.

Dans le mode chauffage additionnel, le fluide circule dans la boucle de réchauffage formée par les branches 1 et 3. En sortant du compresseur 4, il passe par la vanne 11, puis dans le détendeur 9 et atteint, en restant à l'état gazeux, l'évaporateur 5 où il cède de la chaleur au flux d'air F1. Le fluide revient ensuite au compresseur.

Dans le mode repos, le compresseur 4 est hors service et aucun fluide ne circule dans le circuit, de sorte qu'aucun échange de chaleur ne se produit entre l'évaporateur et le flux d'air F1.

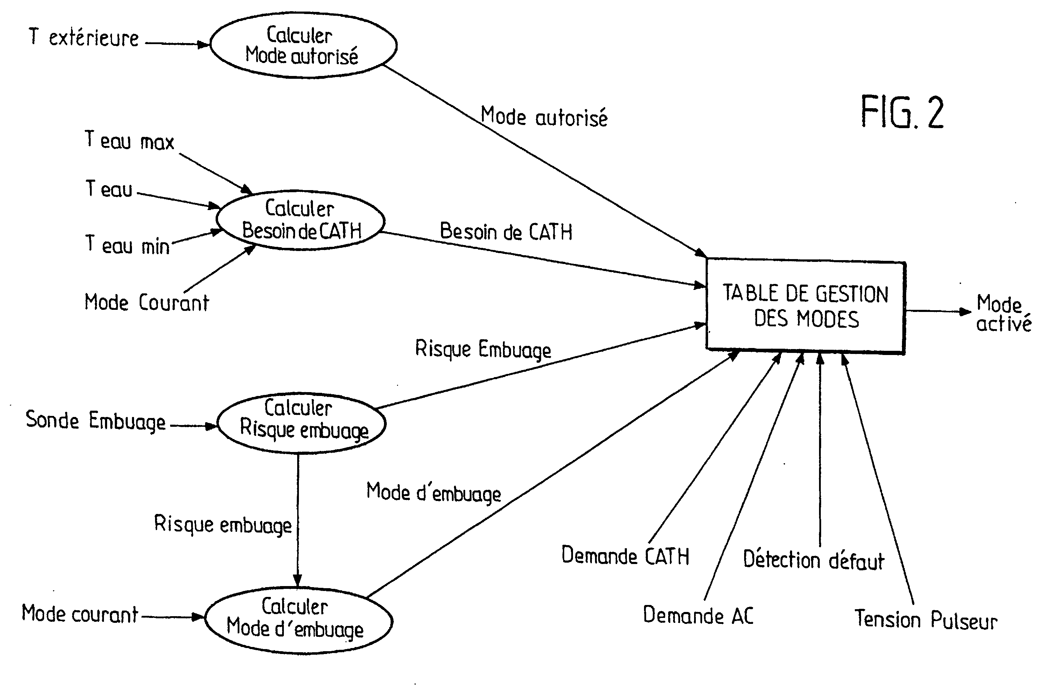

Le tableau 1 ci-après et la figure 2 représentent respectivement une table de vérité et un organigramme relatifs à la commande du circuit CF par le module 12, dans le procédé selon l'invention.

**Tableau 1**

| Mode autorisé | Demande CATH | Demande AC | Besoin de CATH | Risque Embuage | Mode d'embuage | Mode activé |
|---|---|---|---|---|---|---|
| CATH | OUI | X | VRAI | OUI | CATH/AC | REPOS |
| CATH | OUI | X | VRAI | OUI | REPOS | CATH |
| CATH | OUI X | | VRAI | NON | X | CATH |
| CATH | OUI | X | FAUX | X | X | REPOS |
| CATH | NON | X | X | X | X | REPOS |
| | | | | | | |
| REHEAT | X | OUI | X | NON | X | REPOS |
| REHEAT | X | OUI | X | OUI | X | AC |
| REHEAT | X | NON | X | X | X | REPOS |
| | | | | | | |
| AC | X | OUI | X | X | X | AC |
| AC | X | NON | X | X | X | REPOS |

Dans le tableau, les symboles "CATH" et "AC" désignent respectivement le mode chauffage additionnel et le mode climatisation. Le signe X à l'intersection d'un rang et d'une colonne signifie que la variable associée à la colonne est inexistante ou sans effet compte tenu des valeurs des autres variables figurant dans le même rang.

La première colonne du tableau est relative à la variable "Mode autorisé", qui est fonction de la température extérieure mesurée par le capteur 22. La valeur de cette variable est CATH, REHEAT et AC respectivement pour les intervalles de températures < 5°C, 5° à 18°C et > 18°C.

Pour les variables "Demande CATH" et "Demande AC", les valeurs OUI et NON signifient respectivement que le mode correspondant est et n'est pas sélectionné par l'utilisateur.

Comme indiqué sur la figure 2, la variable "Besoin de CATH" est évaluée par comparaison entre la température du fluide de refroidissement circulant dans le radiateur 20 (T eau) et des valeurs de références T eau min et T eau max, de manière à empêcher que le mode chauffage additionnel soit activé alors que cette température est suffisante pour permettre un chauffage suffisant du flux F1 par le radiateur 20. La variable "Mode courant", qui représente le Mode de fonctionnement activé au moment de l'évaluation, permet d'interdire le démarrage du mode chauffage additionnel dès la valeur de température T eau min, et de n'interrompre celui-ci lorsqu'il est déjà activé que pour la valeur T eau max.

La variable "Risque embuage" est évaluée à partir de la variable "Sonde embuage", fournie directement ou indirectement par le capteur 23, de manière à indiquer si le pare-brise est embué ou non. La variable "Mode d'embuage" n'existe que si cette même variable vaut OUI, et est alors égale à la variable "Mode activé".

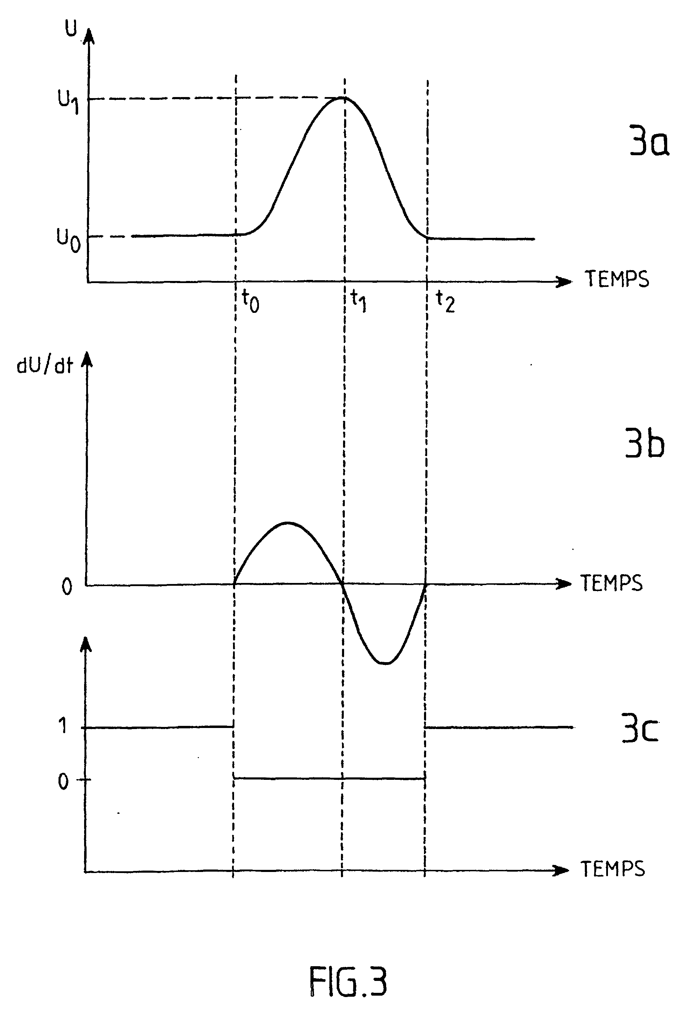

La figure 3 montre une courbe typique 3a de variation en fonction du temps d'un signal de tension U produit par un capteur de buée connu à rayonnement infrarouge ou ultrasonore. En l'absence de buée, ce signal présente une valeur constante U₀. A partir d'un instant t₀, de la buée est détectée et le signal U augmente. L'action corrective déclenchée en réponse à la détection entraîne un ralentissement de l'embuage puis un désembuage, de sorte que le signal passe par un maximum U₁ à un instant t₁ avant de décroître pour revenir à la valeur U₀ à un instant t₂.

La courbe 3b représente la variation en fonction du temps de la dérivée de U par rapport au temps, dU/dt. Cette dérivée est nulle avant t₀, positive entre t₀ et t₁, négative entre t₁ et t₂, et de nouveau nulle au-delà de t₂.

La courbe 3c représente un signal binaire résultant du traitement du signal U et/ou du signal dU/dt et qui prend la valeur 1 en l'absence d'embuage, c'est-à-dire avant t₀ et après t₂, et la valeur 0 en présence d'embuage, c'est-à-dire entre t₀ et t₂. Ce signal peut constituer la variable "Sonde embuage".

L'utilisation du signal dU/dt dispense notamment de la nécessité de connaître la valeur U₀ du signal de tension en l'absence d'embuage.

Ainsi qu'il ressort de la présente description, les différents aspects de l'invention peuvent être utilisés aussi bien individuellement qu'en toutes combinaisons. En particulier, le capteur 23 peut être remplacé par un capteur surveillant une seule zone du pare-brise, ou par deux capteurs surveillant chacun une zone. Par ailleurs, comme indiqué également plus haut, dans l'intervalle de température du mode CATH, le mode repos peut être remplacé par un mode chauffage additionnel à débit de fluide réduit.

## Revendications

1. Procédé pour traiter un flux d'air (F1) à envoyer dans l'habitacle d'un véhicule, dans lequel ledit flux d'air, avant d'être exposé le cas échéant à une source de chaleur (20), traverse un évaporateur (5) qui fait partie d'un circuit de fluide réfrigérant (CF) comprenant également un compresseur (4), un condenseur (6) et au moins un détendeur (9, 10), en tenant compte du choix effectué par un utilisateur entre au moins un mode de travail dudit circuit constitué par un mode climatisation, dans lequel le fluide circule successivement dans l'évaporateur (5) où il se vaporise en recevant de la chaleur du flux d'air, dans le compresseur (4), dans le condenseur (6) où il se condense en cédant de la chaleur à un autre milieu et dans un détendeur (10), et un mode repos dans lequel le fluide ne circule pas dans l'évaporateur, procédé dans lequel la présence éventuelle de buée est détectée sur au moins une surface vitrée (21) du véhicule vers laquelle est envoyée au moins une partie (F2) du flux traité (F1) et le résultat de la détection est pris en compte, conjointement au choix de l'utilisateur, pour définir les conditions de circulation du fluide réfrigérant, **caractérisé en ce que** le mode climatisation n'est autorisé qu'en cas d'embuage, au moins dans une plage déterminée de température à l'extérieur du véhicule, et que le mode repos est activé lorsque le mode climatisation est choisi et non autorisé.

2. Procédé selon la revendication 1, **caractérisé en ce que** le mode climatisation n'est autorisé qu'en cas d'embuage au-dessous d'une première valeur limite de température extérieure et est autorisé indépendamment de l'embuage au-dessus de ladite première valeur limite.

3. Procédé selon l'une des revendications précédentes, **caractérisé en ce que** le circuit de fluide réfrigérant comporte en tant que mode de travail un mode chauffage additionnel dans lequel le fluide circule à l'état gazeux entre l'évaporateur où il cède de la chaleur au flux d'air et le compresseur, sans passer par le condenseur, l'autorisation du mode chauffage additionnel et/ou le débit du fluide réfrigérant dans celui-ci étant fonction de l'embuage.

4. Procédé selon la revendication 3, rattachée à la revendication 2, **caractérisé en ce que** le mode chauffage additionnel est commandé en fonction de l'embuage au-dessous d'une seconde valeur limite de température extérieure inférieure à la première valeur limite, et totalement inhibé au-dessus de ladite seconde valeur limite, et que le mode climatisation n'est autorisé, en cas d'embuage, qu'au-dessus de ladite seconde valeur limite.

5. Procédé selon la revendication 4, **caractérisé en ce que**, au-dessus de ladite seconde valeur limite, le mode chauffage additionnel est inhibé si un embuage apparaît alors que ce même mode est activé, et autorisé dans le cas contraire.

6. Procédé selon l'une des revendications précédentes, **caractérisé en ce qu'**on prend en compte, pour autoriser ou non un mode de travail, un signal (dU/dt) représentatif de la vitesse de variation du degré d'embuage de ladite surface vitrée.

7. Procédé selon la revendication 6, **caractérisé en ce qu'**on combine ledit signal (U) représentatif de la vitesse de variation du degré d'embuage à un signal représentatif du degré d'embuage.

8. Procédé selon l'une des revendications précédentes, **caractérisé en ce qu'**on détecte la présence de buée et/ou la variation du degré d'embuage sur deux régions du pare-brise du véhicule éloignées l'une de l'autre au moyen d'un capteur unique (23) comprenant un émetteur qui émet des rayonnements vers lesdites régions et un récepteur qui reçoit des rayonnements en provenance de celles-ci.

9. Procédé selon l'une des revendications précédentes, **caractérisé en ce qu'**on détecte la présence de buée et/ou la variation du degré d'embuage sur la partie supérieure et sur la partie inférieure du pare-brise et qu'on utilise les signaux de détection relatifs à la partie supérieure pour commander le mode climatisation et les signaux de détection relatifs à la partie inférieure pour commander le mode chauffage additionnel.

10. Dispositif de traitement d'air pour la mise en oeuvre du procédé selon l'une des revendications précédentes, comprenant un circuit de fluide réfrigérant (CF) comportant un évaporateur (5), un compresseur (4), un condenseur (6) et au moins un détendeur (9, 10), une source de chaleur (20), des moyens pour faire passer ledit flux d'air (F1) à travers l'évaporateur puis au contact de la source de chaleur avant de l'envoyer au moins en partie vers au moins une surface vitrée (21) du véhicule, des moyens (4, 11) pour faire circuler le fluide dans le circuit selon au moins un mode de travail, des moyens de sélection permettant à un utilisateur de choisir entre ce ou ces modes de travail et un mode repos, des moyens (23) pour détecter la présence éventuelle de buée sur au moins une surface vitrée (21) du véhicule vers laquelle est envoyée au moins une partie (F2) du flux traité et pour produire un signal (U) en réponse à la détection de buée, des moyens de commande (12) pour commander le mode de circulation du fluide en fonction du choix de l'utilisateur et dudit signal, et des moyens (22) pour déterminer la température à l'extérieur du véhicule, les moyens de commande (12) étant propres à tenir compte de ladite température pour n'autoriser ledit mode climatisation qu'en cas d'embuage, au moins dans une plage déterminée de cette dernière, et pour activer le mode repos lorsque le mode climatisation est choisi et non autorisé.

## Claims

1. A method of treating an air stream (F1) to be delivered into the cabin of a vehicle, wherein the said air stream, before being exposed to a heat source (20) if appropriate, passes through an evaporator (5) which is part of a refrigerant fluid circuit (CF) that also includes a compressor (4), a condenser (6) and at least one expansion device (9, 10), taking into account the choice made by a user between at least one working mode of the said circuit, namely an air conditioning mode in which the fluid flows in succession through the evaporator (5), to be vaporised therein on receiving heat from the air stream, then through the compressor, then through the condenser (6), in which it condenses on yielding heat to another medium, and then through an expansion device (10), and a rest mode in which the fluid does not flow through the evaporator, in which method the presence of any vapour is detected on at least one glazed surface (21) of the vehicle towards which at least a part (F2) of the treated stream (F1) is sent, and the result of the detection is taken into account, together with the user's selection, to define the flow conditions for the refrigerant fluid, **characterised in that** the air conditioning mode is authorised only in the event of misting, at least within a predetermined range of temperature outside the vehicle, and **in that** the rest mode is activated when the air conditioning mode is selected but not authorised.

2. A method according to Claim 1, **characterised in that** the air conditioning mode is authorised only in the event of misting below a first limiting value of outside temperature, and is authorised independently of misting occurring above the said first limiting value.

3. A method according to one of the preceding Claims, **characterised in that** the refrigerant fluid circuit has, as its working mode, an additional heating mode in which it yields heat to the air stream and the compressor without passing through the condenser, authorisation of the additional heating mode, and/or the rate of flow of the refrigerant fluid in the latter, being a function of misting.

4. A method according to Claim 3 when dependent on Claim 2, **characterised in that** the additional heating mode is controlled as a function of misting below a second limiting value of outside temperature which is lower than the first limiting value, and totally inhibited above the said second limiting value, and **in that**, in the event of misting , the air conditioning mode is authorised only above the said second limiting value.

5. A method according to Claim 4, **characterised in that**, above the said second limiting value, the additional heating mode is inhibited if misting occurs while this mode is itself activated, and authorised in the contrary case.

6. A method according to one of the preceding Claims, **characterised in that**, for the purpose of authorising or not authorising a working mode, a signal (dU/dt) representing the rate of variation in the degree of misting of the said glazed surface is taken into account.

7. A method according to Claim 6, **characterised in that** the said signal (U) which represents the rate of variation of the degree of misting is combined with a signal which represents the degree of misting.

8. A method according to one of the preceding Claims, **characterised in that** the presence of misting, and/or the variation in the degree of misting, are detected in two regions of the windscreen of the vehicle, spaced away from each other, by means of a single sensor (23) comprising an emitter which emits radiation towards the said regions and a receiver which receives radiation coming from the latter.

9. A method according to one of the preceding Claims, **characterised in that** the presence of misting and/or the variation in the degree of misting are detected on the upper part and the lower part of the windscreen, and **in that** the detection signals relating to the upper part are used for controlling the air conditioning mode, and the detection signals relating to the lower part are used for controlling the additional heating mode.

10. Air treatment apparatus for performing the method according to one of the preceding Claims, comprising a refrigerant fluid circuit (CF) which includes an evaporator (5), a compressor (4), a condenser (6), and at least one expansion device (9, 10), a heat source (20), means for driving the said air stream (F1) through the evaporator and then into contact with the heat source, before sending it at least partly towards a glazed surface (21) of the vehicle, means (4, 11) for causing the fluid to flow in the circuit in at least one working mode, selection means whereby a user can choose between the said working mode or modes and a rest mode, means (23) for detecting the possible presence of misting on at least one glazed surface (21) of the vehicle towards which at least a part (F2) of the treated stream is directed, and for producing a signal (U) in response to the detection of misting, control means (12) for controlling the mode of circulation of the fluid in response to the user's selection and to the said signal, and means (22) for determining the temperature outside the vehicle, the control means (12) being adapted to take the said temperature into account whereby to authorise the said air conditioning mode only in the event of misting, at least within a predetermined range of the latter, and to activate the rest mode when the air conditioning mode is selected but not authorised.

## Patentansprüche

1. Verfahren zur Behandlung einer in den Innenraum eines Fahrzeugs zu richtenden Luftströmung (F1), bei welchem die Luftströmung bzw. der Luftfluß vor der gegebenenfalls vorgesehenen Aussetzung zu einer Wärmequelle (20) einen Verdampfer (5) durchquert, der Teil eines Kältemittelfluidkreises (CF) ist, umfassend auch einen Kompressor (4), einen Kondensator (6) und zumindest einen Druckminderer (9, 10), unter Berücksichtigung der von einem Benutzer getroffenen Wahl zwischen zumindest einem Arbeitsmodus des Kreises, gebildet durch einen Klimatisierungsmodus, in welchem das Fluid sukzessive zirkuliert in dem Verdampfer (5), wo es verdampft wird unter Aufnahme von Wärme aus der Luftströmung, dem Kompressor (4), dem Kondensator (6), wo es kondensiert wird unter Abgabe von Wärme an ein weiteres Medium, und in einem Druckminderer (10), sowie einem Ruhemodus, in welchem das Fluid nicht in dem Verdampfer zirkuliert, Verfahren, bei welchem das Vorhandensein von eventuellem Beschlag erfaßt wird an zumindest einer verglasten Fläche (21) des Fahrzeuges, hin zu welcher zumindest ein Teil (F2) der behandelten Strömung (F1) gerichtet ist, wobei das Erfassungsergebnis berücksichtigt wird, gemeinsam mit der Wahl des Benutzers, um Zirkulationsbedingungen des Kältemittel fluids zu definieren, **dadurch gekennzeichnet, daß** der Klimatisierungsmodus lediglich im Fall der Beschlagsbildung ermöglicht ist, zumindest in einem vorbestimmten Temperaturbereich außerhalb des Fahrzeuges, und daß der Ruhemodus aktiviert ist, wenn der Klimatisierungsmodus gewählt und nicht zugelassen oder erlaubt ist.

2. Verfahren nach Anspruch 1, **dadurch gekennzeichnet, daß** der Klimatisierungsmodus zugelassen oder erlaubt wird lediglich im Falle einer Beschlagsbildung unterhalb eines ersten Außentemperaturgrenzwertes und unabhängig zugelassen oder erlaubt wird von der Beschlagsbildung oberhalb des ersten Grenzwertes.

3. Verfahren nach einem der vorangegangenen Ansprüche, **dadurch gekennzeichnet, daß** der Kältemittelfluidkreis als Arbeitsmodus einen Zusatzheizmodus umfaßt, bei welchem das Fluid in gasförmigem Zustand zirkuliert zwischen dem Verdampfer, wo es Wärme an die Luftströmung abgibt, und dem Kompressor, ohne durch den Kondensator zu treten, wobei die Ermöglichung des Zusatzheizmodus und/ oder der Durchsatz des Kältemittelfluids hierin abhängig ist von der Beschlagsbildung bzw. dem Beschlag.

4. Verfahren nach Anspruch 3, in Abhängigkeit von Anspruch 2, **dadurch gekennzeichnet, daß** der Zusatzheizmodus gesteuert wird in Abhängigkeit von der Beschlagsbildung unterhalb eines zweiten Außentemperaturgrenzwertes, welcher niedriger ist als der erste Grenzwert, und vollständig gehemmt oder verhindert wird oberhalb des zweiten Grenzwertes, wobei der Klimatisierungsmodus lediglich zugelassen wird im Falle der Beschlagsbildung, wenn der zweite Grenzwert überschritten ist.

5. Verfahren nach Anspruch 4, **dadurch gekennzeichnet, daß** oberhalb des zweiten Grenzwertes der Zusatzheizmodus verhindert oder gehemmt wird, wenn eine Beschlagsbildung auftritt, während dieser Modus aktiviert und zugelassen wird im entgegengesetzten Fall.

6. Verfahren nach einem der vorangegangenen Ansprüche, **dadurch gekennzeichnet, daß** man zur Zulassung oder Nichtzulassung eines Arbeitsmodus ein Signal (dU/dt) berücksichtigt, repräsentativ für die Veränderungsgeschwindigkeit des Grades an Beschlag der verglasten Fläche bzw. Glasfläche.

7. Verfahren nach Anspruch 6, **dadurch gekennzeichnet, daß** man das Signal (U) repräsentativ für die Veränderungsgeschwindigkeit des Grades an Beschlagsbildung mit einem Signal kombiniert, repräsentativ für den Grad der Beschlagsbildung bzw. des Beschlages.

8. Verfahren nach einem der vorangegangen Ansprüche, **dadurch gekennzeichnet, daß** man das Vorhandensein von Nebel bzw. Kondensat bzw. Beschlag und/oder die Veränderung des Grades an Beschlagsbildung an zwei Bereichen der Windschutzscheibe des Fahrzeuges, mit Bezug zueinander beabstandet, mittels eines einzelnen Sensors (23) erfaßt, umfassend einen Sender, der Strahlung emittiert hin zu den Bereichen, sowie einen Empfänger, der Strahlungen empfängt, hierher herrührend.

9. Verfahren nach einem der vorangegangenen Ansprüche, **dadurch gekennzeichnet, daß** man das Vorhandensein von Nebel oder Kondensat bzw. Beschlag und/oder die Veränderung des Grades an Beschlagsbildung bzw. Beschlag an dem oberen Teil oder Abschnitt und dem unteren Teil oder Abschnitt der Windschutzscheibe erfaßt, wobei man die Erfassungssignale bezüglich des oberen Teiles oder Abschnittes verwendet zur Steuerung des Klimatisierungsmodus und die Erfassungssignale bezüglich des unteren Teiles oder Abschnittes zum Zwecke der Steuerung des Zusatzheizmodus.

10. Luftbehandlungseinrichtung zur Durchführung eines Verfahrens gemäß einem der vorangegangenen Ansprüche, umfassend einen Kältemittelfluidkreis (CF), umfassend einen Verdampfer (5), einen Kompressor (4), einen Kondensator (6) und zumindest einen Druckminderer (9, 10), eine Wärmequelle (20), Mittel, um die Luftströmung bzw. den Luftfluß (F1) durch den Verdampfer treten zu lassen, sowie anschließend zum in Berührung bringen mit der Wärmequelle, bevor zumindest ein Teil davon hin zu zumindest einer verglasten Fläche bzw. Glasfläche (21) des Fahrzeuges gerichtet wird, Mittel (4, 11), um das Fluid in dem Kreis zirkulieren zu lassen, gemäß zumindest einem Arbeitsmodus, wobei Auswahlmittel es einem Benutzer ermöglichen auszuwählen zwischen diesem oder diesen Arbeitsmodus/i und einem Ruhemodus, Mittel (23) zur Erfassung des Vorhandenseins eventuellen Beschlages bzw. Nebels bzw. einer eventuellen Beschlagsbildung an zumindest einer Glasfläche bzw. verglasten Fläche (21) des Fahrzeuges, hin zu welcher zumindest ein Teil (F2) der behandelten Strömung bzw. des behandelten Flusses gerichtet ist, um ein Signal (U) zu erzeugen, ansprechend auf die Erfassung des Nebels oder Beschlages, Steuermittel (12), um den Zirkulationsmodus des Fluids in Abhängigkeit von der Wahl des Benutzers und des Signales zu steuern, sowie Mittel (22) zur Bestimmung der Temperatur außerhalb des Fahrzeuges, wobei die Steuermittel (12) geeignet sind, die Temperatur zu berücksichtigen, um den Klimatisierungsmodus lediglich zuzulassen im Falle einer Beschlagsbildung, bei zumindest einem vorbestimmten Außentemperaturbereich, sowie zum Zwecke der Aktivierung des Ruhemodus wenn der Klimatisierungsmodus gewählt und nicht zugelassen ist.
